# EUROPEAN PATENT APPLICATION

(11) **EP 2 299 184 A2**
(43) Date of publication of application: **23.03.2011**
(21) Application number: 10174996.8
(22) Date of filing: 02.09.2010
(51) Int. Cl.: F24D 12/02, F24D 19/10

(54) **Device for supplying warm water and method thereof**

(30) Priority: 11.09.2009 KR 20090085959; 15.06.2010 KR 20100056449
(71) Applicant: Woongjin Coway Co., Ltd., Choongcheongnam-do 314-895 (KR)
(72) Inventor: Kim, Jeong Yeon, 150-103, Seoul (KR); Kim, Jong Min, KR-151-70, Seoul (KR); Kang, Tae Kyung, 152-020, Seoul (KR)
(74) Representative: van Westenbrugge, Andries

(57) **Abstract**

Provided is a device for supplying warm water and a method thereof. The device for supplying warm water includes a first heater configured to have a first set capacity and heating received water, a second heater configured to have a second set capacity greater than the first set capacity and heating received water, and a control part calculating heater driving cycles of the first heater and the second heater according to a set water temperature, and driving the first heater and the second heater according to the heater driving cycles. The control part calculates the heater driving cycle of the first heater by using a phase control method, and calculates the heater driving cycle of the second heater by using a zero-crossing control method.

## Description

### CROSS-REFERENCE TO RELATED APPLICATIONS

This application claims the priorities of Korean patent application No. 10-2009-0085959 filed on September 11, 2009 and Korean patent application No. 10-2010-0056449 filed on June 15, 2010 in the Korean Intellectual Property Office, the disclosure of which is incorporated herein by reference.

### BACKGROUND OF THE INVENTION

### Field of the Invention

The present invention relates to a device for supplying warm water and a method thereof, and more particularly, to a device for supplying warm water (hereinafter also "warm water supply device) and a method thereof, capable of instantaneously heating water for a home bidet.

### Description of the Related Art

A warm water supply device, used in a bidet for home use, is classified into a water tank type that includes a heater installed inside a water tank, and an instantaneous heating type that heats water using a heater whenever necessary.

The water-tank type warm water supply device includes a heater disposed inside a water tank for storing warm water, and maintains the water temperature of the water tank at a set temperature at all times regardless of whether or not a bidet is in use. Thus, the water-tank type warm water supply device requires a large amount of standby power and space.

Recently, the instantaneous heating type warm water supply device has come into widespread use. When a user makes a request for the use of a bidet, this type of warm water supply device heats water, being discharged through an outlet, by using a heater.

To ensure the stable operation of such an instantaneous heating type water supply device, the heater needs to operate only when water is flowing.

However, the instantaneous heating type water supply device having such a heater frequently generates noise, and this may cause burning or overheating and so degrade efficiency.

In particular, harmonic components such as noise or the like, generated in the warm water supply device, may increase the temperature of a transformer or the like that supplies power thereto, thereby increasing the possibility of fire. Moreover, in the case of flickering, load, applied to a power supply device, changes suddenly, causing defective operations of other load devices connected to the power supply device.

### SUMMARY OF THE INVENTION

An aspect of the present invention provides a device for supplying warm water and a method thereof, capable of preventing burning or overheating by reducing the generation of noise, particularly, harmonic components and flickers.

According to an aspect of the present invention, there is provided a device for supplying warm water, the device including: a first heater configured to have a first set capacity and heating received water; a second heater configured to have a second set capacity greater than the first set capacity and heating received water; and a control part calculating heater driving cycles of the first heater and the second heater according to a set water temperature, and driving the first heater and the second heater according to the heater driving cycles, wherein the control part calculates the heater driving cycle of the first heater by using a phase control method, and calculates the heater driving cycle of the second heater by using a zero-crossing control method.

The control part may determine whether a temperature of water received in the first heater and the second heater is lower than the set water temperature, and calculate the heater driving cycles when the temperature of the received water is lower than the set water temperature.

The first set capacity may be greater than zero and lower than 550 W, and the second set capacity may be equal to or greater than 550 W and lower than 1250 W.

According to another aspect of the present invention, there is provided a method of supplying warm water, the method including: preparing a first heater having a first set capacity, and a second heater having a second set capacity greater than the first set capacity; calculating a heater driving cycle of the first heater according to a set water temperature by using a phase control method, while calculating a heater driving cycle of the second heater according to the set water temperature by using a zero-crossing control method; and driving the first heater and the second heater according to the heater driving cycles to heat water received in the first heater and the second heater, and discharging the heated water.

The method may further include determining whether a temperature of the water received in the first heater and the second heater is lower than the set water temperature, wherein the heater driving cycles are calculated when the temperature of the water is lower than the set water temperature.

The first set capacity may be greater than zero and lower than 550 W, and the second set capacity may be equal to or greater than 550 W and lower than 1250 W.

According to another aspect of the present invention, there is provided a method of supplying warm water, the method including: a preparation operation in which a first heater having a first set capacity, and a second heater having a second set capacity greater than the first set capacity are prepared; an operation setting operation in which a set water temperature and set water quantity are input; an operation preparation operation in which water is received in an amount equal to or greater than the set water quantity, it is determined whether to perform heating according to a temperature of the received water, and quantity of heat required for the heating is calculated; and a control operation in which, when the heating is required, at least one of the first heater and the second heater is selected as a heater to be driven according to the required quantity of heat, a heater driving cycle of the selected heater is calculated, and the selected heater is driven according to the heater driving cycle, wherein in the control operation, a heater driving cycle of the first heater is calculated by using a phase control method, and a heater driving cycle of the second heater is calculated by using a zero-crossing control method.

The control operation may include a first control operation in which the first heater is selected as a heater to be driven when the required quantity of heat is less than the first set capacity, and the heater driving cycle of the first heater is calculated by using the phase control method to thereby drive the first heater.

The control operation may include a second control operation in which the second heater is selected as a heater to be driven when the required quantity of heat is equal to or greater than the first set capacity and lower than the second set capacity, and the heater driving cycle of the second heater is calculated by using the zero-crossing control method to thereby drive the second heater.

The control operation may include a third control operation in which the first heater and the second heater are selected as heaters to be driven when the required quantity of heat is equal to or greater than the second set capacity, the heater driving cycle of the first heater is calculated by using the phase control method to thereby drive the first heater, and the heater driving cycle of the second heater is calculated by using the zero-crossing control method to thereby drive the second heater.

In the third control operation, the heater driving cycle of the second heater may be calculated such that the second heater is driven by the second set capacity, and the heater driving cycle of the first heater may be calculated such that the first heater is driven by a capacity obtained by subtracting the second set capacity from the required quantity of heat.

The operation preparation operation may include: receiving water in an amount equal to or greater than the set water quantity; measuring a water temperature of the received water; calculating the required quantity of heat for heating when the measured water temperature is lower than the set water temperature; and discharging water when the measured water temperature is equal to or higher than a preset temperature, and going into a standby state, wherein the preset temperature is equal to or higher than the set water temperature, and the measuring of the water temperature is performed again when the water temperature is equal to or higher than the set water temperature and lower than the preset temperature.

The first set capacity may be greater than zero and lower than 550 W, and the second set capacity may be equal to or greater than 550 W and lower than 1250 W.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a block diagram illustrating a warm water supply control system according to an exemplary embodiment of the present invention;

Fig. 2 is a graph showing a phase control method according to an exemplary embodiment of the present invention;

FIG. 3 is a graph illustrating a zero-crossing control method according to an exemplary embodiment of the present invention;

FIG. 4 is a table showing the results of a harmonic test and a flicker test according to heater capacity, according to an exemplary embodiment of the present invention;

FIG. 5 is a flowchart illustrating a method of supplying warm water according to an exemplary embodiment of the present invention;

FIG. 6 is a flowchart illustrating a method of supplying warm water according to another exemplary embodiment of the present invention; and

FIG. 7 is a flowchart illustrating a preparation operation of a method of supplying warm water according to another exemplary embodiment of the present invention.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity. The same or equivalent elements are referred to by the same reference numerals throughout the specification.

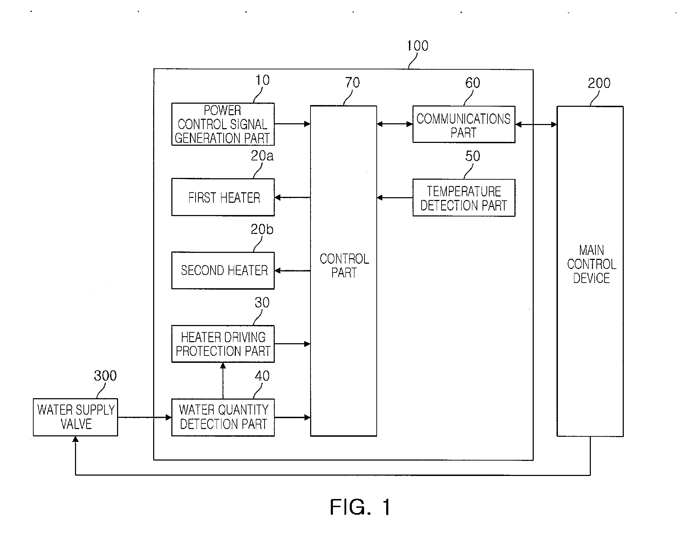

FIG. 1 is a block diagram illustrating a warm water supply control system according to an exemplary embodiment of the present invention. Referring to FIG. 1, the warm water supply control system includes a warm water supply device 100, a main control device 200, and a water supply valve 300.

The warm water supply device 100 includes a power control signal generation part 10, a first heater 20a, a second heater 20b, a heater driving protection part 30, a water quantity detection part 40, a temperature detection part 50, a communications part 60, and a control part 70. The parts of the warm water supply device 100 will now be described in detail.

The first heater 20a and the second heater 20b heat water, being introduced therein, and discharge the heated water. The first heater 20a is configured to have a first set capacity, which is greater than zero and lower than 550 W. The second heater 20b has a second set capacity which is greater than the first set capacity. Here, the second set capacity is equal to or greater than 550 W and lower than 1250 W.

The water quantity detection part 40 detects the quantity of water introduced to the first heater 20a and the second heater 20b, and sends information regarding the water quantity to the heater driving protection part 30.

The heater driving protection part 30 determines whether the quantity of water, introduced to the first heater 20a and the second heater 20b, is equal to or greater than a preset value. When the quantity of water is equal to or greater than the preset value, the heater driving protection part 30 generates a heater driving enabling signal and sends it to the control part 70.

The power control signal generation part 10 receives alternating current (AC) power, obtains the period and zero point of the AC power, and transmits them to the control part 70. A heater driving signal from the control part 70 is generated according to a heater driving cycle calculated on the basis of the period and zero point of the AC power, provided from the power control signal generation part 10.

The temperature detection part 50 detects a water temperature of water discharged from the first heater 20a and the second heater 20b. The temperature detection part 50 detects a water temperature when the quantity of water introduced to the first heater 20a and the second heater 20b is equal to or greater than a preset value.

The control part 70 calculates the heater driving cycles of the first and second heaters 20a and 20b on the basis of a set water temperature (i.e., a target water temperature of the water being heated), and drives the first and second heaters 20a and 20b according to the heater driving cycles. The control part 70 determines whether the water temperature of water introduced into the first and second heaters 20a and 20b is lower than the set water temperature. When the water temperature is lower than the set water temperature, the control part 70 calculates heater driving cycles upon receiving information regarding water quantity from the water quantity detection part 40, information regarding a set water temperature from the main control device 200, and information regarding a water temperature from the temperature detection part 50. In this case, the control part 70 uses a phase control method to calculate a heater driving cycle for the first heater 20a, and uses a zero-crossing control method to calculate a heater driving cycle for the second heater 20b.

Further, the control part 70 determines whether a heater driving enabling signal is received from the heater driving protection part 30. When the heater driving enabling signal is received, the control part 70 allows for the heating of water being introduced. The control part 70 receives the heater driving enabling signal so as not to generate a heater driving signal even when no water is introduced into the first heater 20a and the second heater 20b.

The communications part 60 sends a value of the set water temperature, received from the main control device 200, to the control part 70, and sends the quantity of discharged water from the control part 70 and a water temperature of the discharged water to the main control device 200. Moreover, the communications part 60 receives a Direct Current (DC) power voltage from the main control device 200, and sends it to the power control signal generation part 10, the first heater 20a, the second heater 20b, the heater driving protection part 30, the water quantity detection part 40, the temperature detection part 50, the communications part 60, and the control part 70.

When a user requests a specific operation (e.g., washing, bidet or the like), the main control device 200 detects this request and turns on the water supply valve 300 so that water is introduced into the first heater 20a and the second heater 20b. In addition, the main control device 200 sends a value of the set water temperature to the control part 70 of the warm water supply device 100 so that the warm water supply device 100 can perform a heating operation according to the set water temperature.

The water supply valve 300 controls water supply by being turned ON/OFF in response to the request from the main control device 200.

The warm water supply device according to this exemplary embodiment may be used for, representatively, a bidet, and may be applied to other devices adopting such a principle.

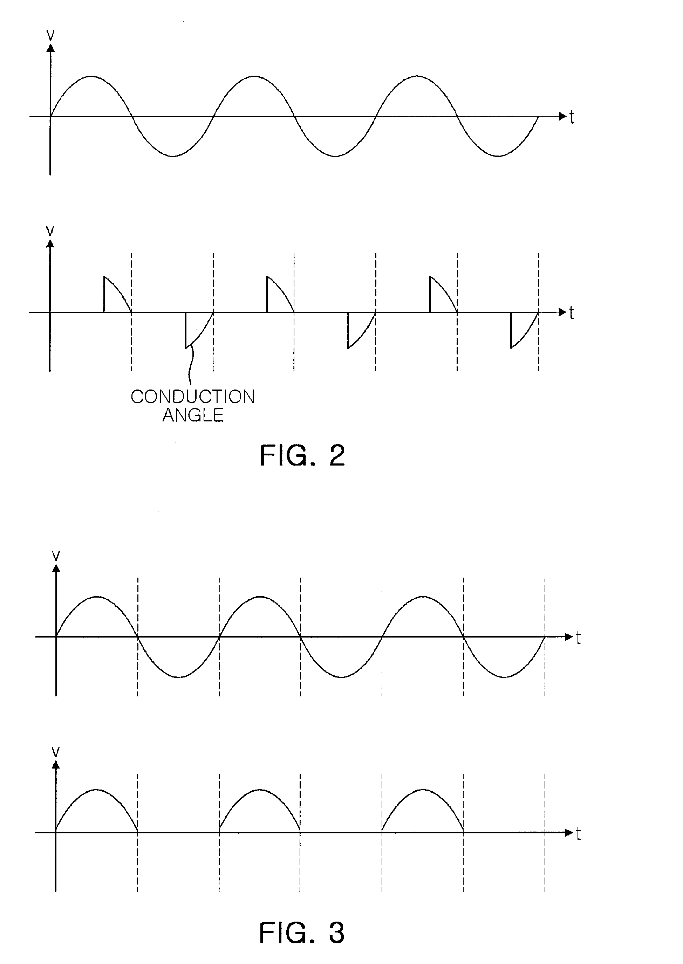

FIG. 2 is a graph illustrating a phase control method. Referring to FIG. 2, the upper graph of FIG. 2 shows an input power voltage V over time t, and the lower graph thereof shows a phase control voltage V over time t. When a heater is driven at the input power voltage corresponding to the upper graph of FIG. 2 by using a phase control method, the phase control voltage, as shown in the lower graph of FIG. 2 is output.

The phase control method is a method of cutting off power at a zero voltage by applying a power voltage to a heater in a specific phase at each half cycle. Here, a phase angle at which the power voltage is applied is referred to as a conduction angle.

This phase control method has a defect of noise generation caused by harmonics. A heater capacity of 550 W or higher renders the device to fail a harmonic test, one of the subjects of CE test.

FIG. 3 is a graph illustrating a zero-crossing control method according to an exemplary embodiment of the present invention. Referring to FIG. 3, the upper graph illustrates an input power voltage V over time t, and the lower graph illustrates a zero-crossing control voltage V over time t. When a heater is driven at the input power voltage, as shown in the upper graph, by the use of a zero-crossing control method, the zero-crossing control voltage as shown in the lower graph is output.

The zero-crossing control method is a method of applying only a positive power voltage when an AC power voltage is applied to a heater.

This zero-crossing control method does not generate noise caused by harmonics. Thus, when a heater capacity is equal to or greater than 550 W and lower than 1250 W, requirements to pass a harmonic test, a CE test, cannot be satisfied (thus, the harmonic test or the CE test is failed).

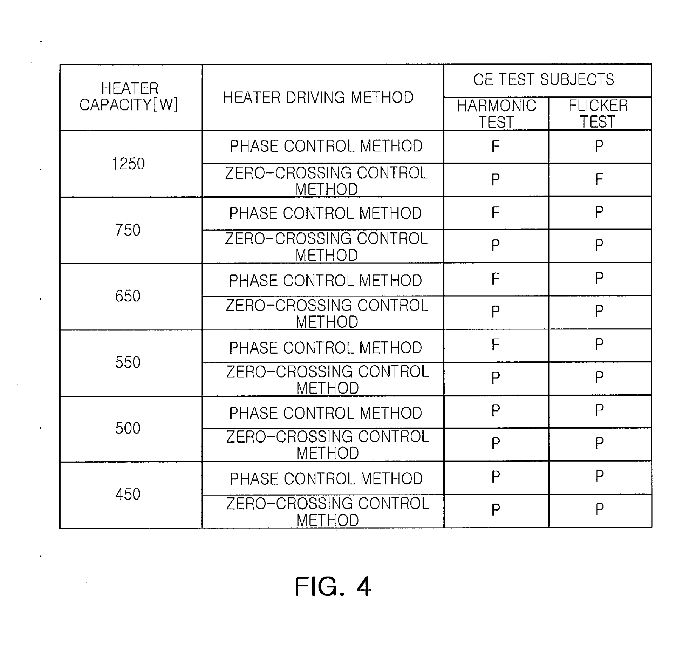

FIG. 4 is a table showing the result of harmonic tests and flicker tests according to the heater capacity according to an exemplary embodiment of the present invention. Here, P represents pass, and F represents fail.

Referring to FIG. 4, a heater capacity of 450 W or 550 W satisfies requirements to pass both the harmonic test and the flicker test regardless of whether the phase control method or the zero-crossing control method is used.

However, in the case that the heater capacity is 550 W, 650 W or 750 W, requirements for both the harmonic test and the flicker test can be met (Pass) only when the zero-crossing control method is used. When the phase control method is used, the warm water supply device may pass the flicker test but fail the harmonic test.

Moreover, in the case that the heater capacity is 1250 W and the phase control method is used, the warm water supply device may pass the flicker test but fail the harmonic test. When the zero-crossing control method is used, the warm water supply device may pass the harmonic test but fail the flicker test.

A reference value for the harmonic test, a CE test, is determined by setting a predetermined margin to a boundary value at which harmonic noise, generated by the warm water supply device, does not affect a power supply device connected to the warm water supply device.

Accordingly, by designing the warm water supply device to meet the reference value of the harmonic test, the power supply device, supplying power to the warm water supply device, is prevented from generating heat due to harmonics.

Moreover, an increase in harmonic components may result in the excessive consumption of power. Namely, the increase in harmonic components may increase power consumption, which is in proportion to the square of a frequency value.

The reference value of the flicker test of the CE test is determined by setting a predetermined margin to a boundary value at which the operation of other load devices connected to the power supply device is not affected by flicker components generated by the warm water supply device.

In particular, since devices such as lamps are sensitive to a change in supply current, the generation of flicker components in the warm water supply device may cause inconvenient to a user. Moreover, other load devices therein are susceptible to damage since current supply may suddenly increase or decrease.

Therefore, the stable operation of other load devices connected to the power supply device may be ensured by designing the warm water supply device to meet the reference value for the flicker test of the CE test.

As shown in FIG. 4, when a single heater is provided to the warm water supply device and is driven by using the phase control method, a heater capacity of 550 W or higher may meet the requirements for the harmonic test of the CE test.

To overcome such a defect, according to this exemplary embodiment, two heaters are provided to control the supply of warm water. That is, when a heater capacity needs to be 1250 W, two heaters having respective heater capacities of 500 W and 750 W are provided. In this case, the heater of 500 W is driven by using the phase control method, while the heater of 750 W is driven by using the zero-crossing control method.

As described above, the warm water supply device is provided with the two heaters with the respective heater capacities of 500 W and 750 W. As a result, the warm water supply device can pass both the harmonic test and the flicker test, overcoming the limitation of failing the harmonic test while passing the flicker test in the case of using the phase control method, and of failing the flicker test while passing the harmonic test in the case of using the zero-crossing control method at the time the heater capacity is 1250 W.

As for heater construction, respective heaters of 500 W and 750 W for a heater capacity of 1250 W have been described. However, the heater capacity may be varied provided that one heater has a first set capacity while the other heater has a second set capacity. That is, heaters of 450 W and 800 W may be configured in order to realize the heater capacity of 1250 W.

Further, even when three or more heaters are provided to achieve the capacity of 1250 W and are driven by using the phase control method, the warm water supply device according to this exemplary embodiment may pass the harmonic test and the flicker test. However, the construction including three heaters is more complicated than when two heaters are provided. Thus, the warm water supply device may be provided with two heaters.

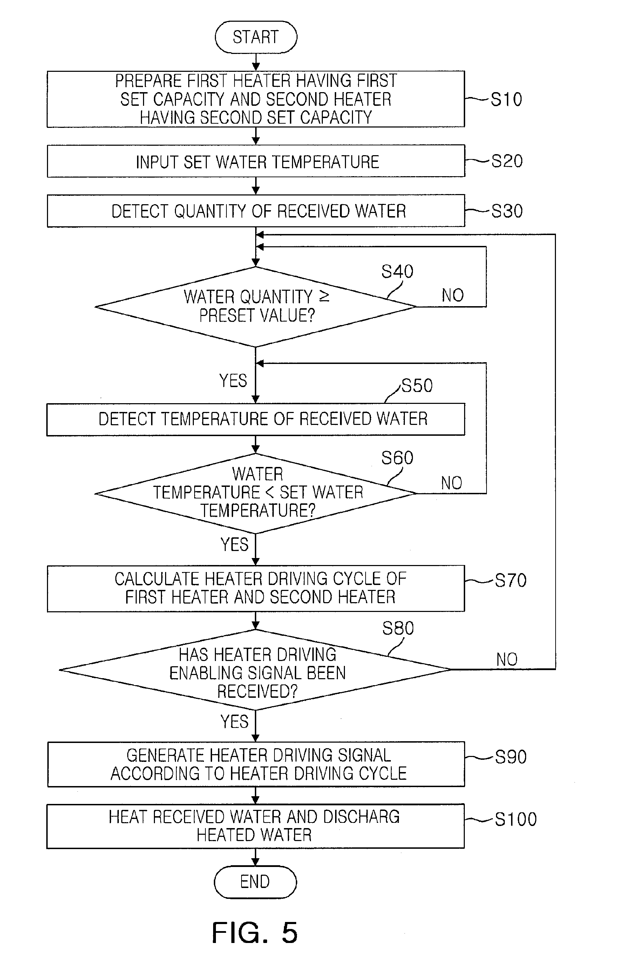

FIG. 5 is a flowchart illustrating a method of supplying warm water according to an exemplary embodiment of the present invention. FIG. 5 will now be explained together with FIG. 1.

In operation S10, the first heater 20a having a first set capacity and the second heater 20b having a second set capacity greater than the first set capacity are prepared.

Thereafter, when a set water temperature sent from the main control device 200 is input to the control part 70 in operation S20, the water quantity detection part 40 detects the quantity of water flowing into the first heater 20a and the second heater 20b in operation S30, and determines whether the detected water quantity is greater than a preset value in operation S40.

Subsequently, when the detected water quantity is equal to or greater than the preset value, the temperature detection part 50 detects the temperature of water discharged from the first heater 20a and the second heater 20b in operation S50. However, when the detected water quantity does not reach the water quantity, operation S40 is repeated.

Thereafter, the control part 70 determines whether the water temperature of water introduced into the first heater 20a and the second heater 20b is lower than the set water temperature in operation S60. However, when the water temperature is not lower than the set water temperature, the process is fed back to operation S50.

Thereafter, when the water temperature is lower than the set water temperature, the control part 70 calculates the driving cycles of the first heater 20a and the second heater 20b in operation S70 upon receiving information regarding the water quantity reported from the water quantity detection part 40, information regarding the set water temperature provided from the main control device 20-, and information regarding the temperature of water received from the temperature detection part 50. In this operation, the control part 70 uses the phase control method in calculating the heater driving cycle of the first heater 20a, and uses the zero-crossing control method in calculating the heater driving cycle of the second heater 20b.

Subsequently, the control part 70 determines whether a heater driving enabling signal, sent from the heater driving protection part 30, is received in operation S80. In order to drive the first heater 20a and the second heater 20b, the control part 70 needs to receive a heater driving enabling signal from the heater driving protection part 30. The control part 70 receives the heater driving enabling signal from the heater driving protection part 30 in order to prevent the control part 70 from generating a heater driving signal even when water does not flow into the first heater 20a and the second heater 20b.

Thereafter, when the heater driving enabling signal is received, the control part 70 generates a heater driving signal according to a heater driving cycle calculated on the basis of the period and zero point of AC power supplied from the power control signal generation part 10 in operation S90. However, when the control part 70 does not receive the heater driving enabling signal in operation S80, the first heater 20a and the second heater 20b are not able to heat water being introduced, and thus the process is fed back to operation S400.

Subsequently, the first heater 20a and the second heater 20b heat water introduced thereinto, and discharge the heated water in operation S100.

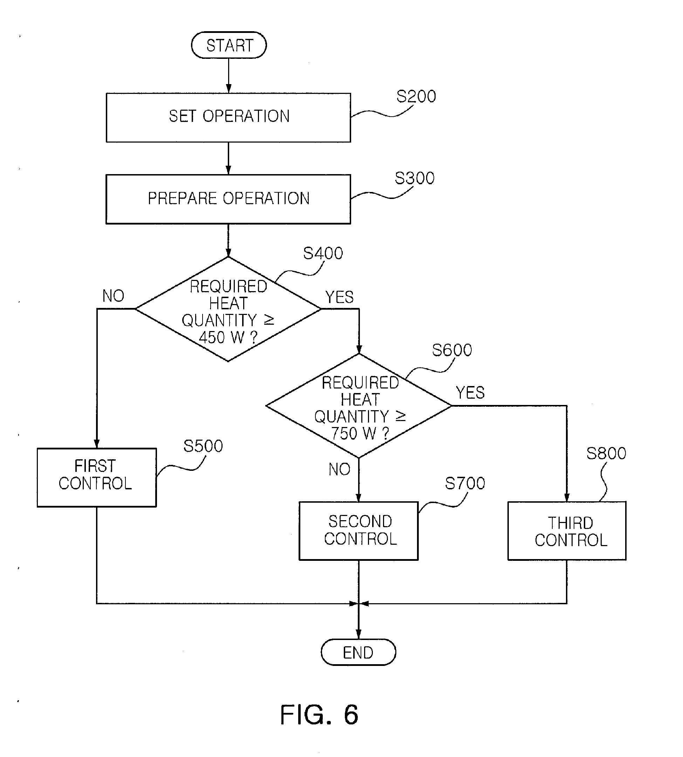

FIG. 6 is a flowchart illustrating a method of supplying warm water according to another exemplary embodiment of the present invention.

First, the first heater 20a having a first set capacity and the second heater 20b having a second set capacity are prepared.

Thereafter, in an operation setting operation S200, a set water temperature and set water quantity may be input. Here, the set water temperature refers to a target water temperature of water being discharged, and the set water quantity refers to target quantity or target pressure of water being discharged. In the operation setting operation S200, the set water temperature and the set water quantity may be input directly by a user or by reading pre-stored or stored use patterns.

In an operation preparation operation S300, water to be heated is received in an amount equal to or greater than the set water quantity, and it may be determined whether heating is to be performed or how much heat is required according to a water temperature of the received water. Whether to perform heating may be determined by comparing the set water temperature with the temperature of the received water. When it is determined that heating is required, the quantity of heat required for the heating operation may be calculated in due consideration of the water quantity, the set water temperature and the like.

When the required quantity of heat is less than the first set capacity in operation S400, a first control operation S500 is performed. In the first control operation S500, a heater driving cycle of the first heater is calculated by using the phase control method, and the first heater may be driven accordingly.

When the required quantity of heat is equal to or greater than the first set capacity and less than second set capacity in operation S600, a second control operation S700 is performed. In the second control operation S700, the heater driving cycle of the second heater is calculated by using the zero-crossing control method, and the second heater the zero-crossing method is driven accordingly.

When the required quantity of heat is equal to or greater than the second set capacity in operation S600, a third control operation S800 is performed. In the third control operation S800, the heater driving cycle of the first heater is calculated by using the phase control method and the first heater is driven accordingly, while the heater driving cycle of the second heater is calculated by using the zero-crossing method and the second heater is driven accordingly.

Although not shown, it can be checked whether an error is generated and whether an operation time expires during the first, second or third control operation S500, S700 or S800.

When an error occurs or an operation time expires in the first, second or third control operations S500, S700 or S800, the first, second or third control operation S500, S700 or S800 may be stopped and in a standby state.

When no error occurs and the operation time does not expire in the first, second or third operation S500, S700 or S800, an operation goes into the standby state. In this case, only the operations of determining whether to perform heating and calculating the quantity of heat for heating may be performed according to a temperature of received water, without any additional water supply.

In the third control operation S800, a different control method may be used according to priority in using the first heater 20a and the second heater 20b.

For example, in the third control operation S800, when the second heater 20b has higher priority, the heater driving cycle is calculated such that the second heater 20b is driven by the second set capacity, and the heater driving cycle for the first heater 20a may be calculated such that the first heater 20a is driven by a capacity obtained by subtracting the second set capacity from the required quantity of heat.

In the third control operation S800, when the first heater 20a has higher priority, the heater driving cycle is calculated such that the first heater 20a is driven by the first set capacity, and the heater driving cycle for the second heater 20b may be calculated such that the second heater 20b is driven by a capacity obtained by subtracting the first set capacity from the required quantity of heat.

A heater that undergoes less change in an ability to control a water temperature according to the required quantity of heat may have lower priority. For a heater that undergoes a severe change in an ability to control a water temperature, it is not easy to control a water temperature when the quantity of water to be heated changes. Therefore, the quantity of water may be determined such that the quantity of heat, required for heating, becomes identical to the set capacity of the heater. This is because, when the required quantity of heat is identical to the set capacity of the heater, a large amount of water needs to be heated, and thus the range of a temperature change is reduced, thereby contributing to enhancing the ability to control the water temperature.

Referring to FIG. 6, the method of supplying warm water, according to this exemplary embodiment, enables the efficient use of a heater and achieves power saving by separately controlling the first and second heaters 20a and 20b. Furthermore, the separate control of the first and second heaters leads to precise temperature control, and prevents unnecessary energy consumption, thereby minimizing power consumption.

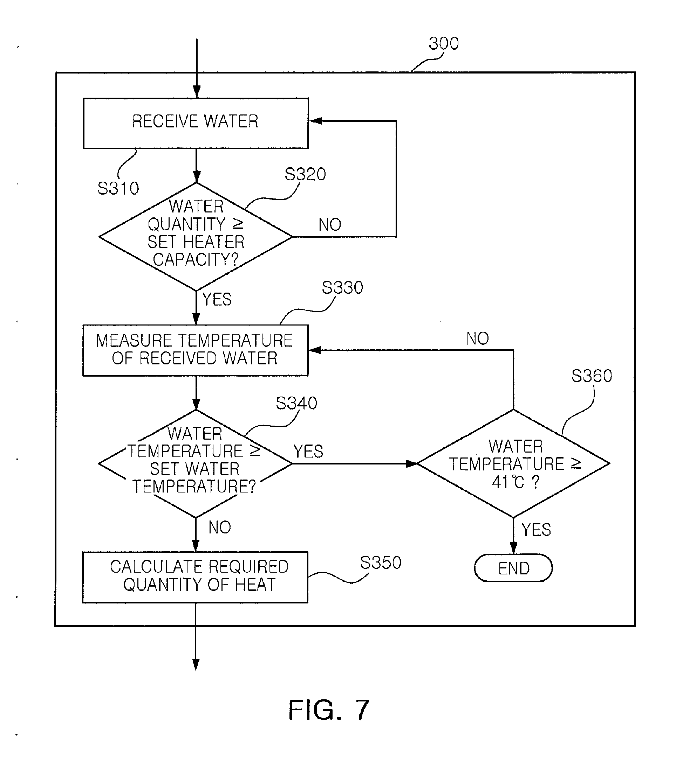

FIG. 7 is a flowchart illustrating an operation preparation operation of a method of supplying warm water according to another exemplary embodiment of the present invention.

First, water to be heated is received in operation S310, and it is measured whether the quantity of received water corresponds to a set heater capacity in operation S320, thereby rendering the water quantity to be equal to or greater than the set heater capacity.

Thereafter, a temperature of the received water is measured in operation S330, and the measured water temperature is compared with a set water temperature in operation S340.

Awater temperature lower than the set water temperature means that heating is required. Therefore, the quantity of heat required for heating the received water is calculated on the basis of the set water temperature and the quantity water in operation S350.

However, when the set water temperature is low, water may be discharged without being heated. However, the excessively low set water temperature makes the temperature of water being discharged so low that a user may experience inconvenience. Since there is a high possibility that setting the set water temperature to a excessively low level while using a warm water supply device may be a mistake of a user, water may be caused to be discharged without heating only when the set water temperature is equal to or higher than a predetermined level.

As one example of implementing the above-stated setting, when the water temperature is equal to or higher than the set water temperature in operation S340 and is less than a preset temperature in operation S360, received water is discharged and the operation goes into a standby state.

The preset temperature needs to be equal to or higher than the set water temperature. For example, the preset temperature may be set to 41°C, which is marginally higher than body temperature, causing no inconvenience to a user.

As set forth above, according to the device for supplying warm water and the method thereof according to exemplary embodiments of the invention, two heaters are provided and adopt the phase control method and the zero-crossing control method, respectively. Accordingly, noise generation is suppressed as compared to the case of employing a single heater, thereby preventing the burning or overheating of the warm water supply device and increasing the efficiency thereof.

In addition, according to the device for supplying warm water and the method thereof, the set capacities of the heaters are adjusted such that harmonic components and flickers are reduced and thus do not affect the operations of a power supply device and other load devices connected to the power supply device.

While the present invention has been shown and described in connection with the exemplary embodiments, it will be apparent to those skilled in the art that modifications and variations can be made without departing from the spirit and scope of the invention as defined by the appended claims.

## Claims

1. A device for supplying warm water, the device comprising:
a first heater configured to have a first set capacity and heating received water;
a second heater configured to have a second set capacity greater than the first set capacity and heating received water; and
a control part calculating heater driving cycles of the first heater and the second heater according to a set water temperature, and driving the first heater and the second heater according to the heater driving cycles,
wherein the control part calculates the heater driving cycle of the first heater by using a phase control method, and calculates the heater driving cycle of the second heater by using a zero-crossing control method.

2. The device of claim 1, wherein the control part determines whether a temperature of water received in the first heater and the second heater is lower than the set water temperature, and calculates the heater driving cycles when the temperature of the received water is lower than the set water temperature.

3. The device of claim 1, wherein the first set capacity is greater than zero and lower than 550 W, and the second set capacity is equal to or greater than 550 W and lower than 1250 W.

4. A method of supplying warm water, the method comprising:
preparing a first heater having a first set capacity, and a second heater having a second set capacity greater than the first set capacity;
calculating a heater driving cycle of the first heater according to a set water temperature by using a phase control method, while calculating a heater driving cycle of the second heater according to the set water temperature by using a zero-crossing control method; and
driving the first heater and the second heater according to the heater driving cycles to heat water received in the first heater and the second heater, and discharging the heated water.

5. The method of claim 4, further comprising determining whether a temperature of the water received in the first heater and the second heater is lower than the set water temperature,
wherein the heater driving cycles are calculated when the temperature of the water is lower than the set water temperature.

6. The method of claim 4, wherein the first set capacity is greater than zero and lower than 550 W, and the second set capacity is equal to or greater than 550 W and lower than 1250 W.

7. A method of supplying warm water, the method comprising:
a preparation operation in which a first heater having a first set capacity, and a second heater having a second set capacity greater than the first set capacity are prepared;
an operation setting operation in which a set water temperature and set water quantity are input;
an operation preparation operation in which water is received in an amount equal to or greater than the set water quantity, it is determined whether to perform heating according to a temperature of the received water, and quantity of heat required for the heating is calculated; and
a control operation in which, when the heating is required, at least one of the first heater and the second heater is selected as a heater to be driven according to the required quantity of heat, a heater driving cycle of the selected heater is calculated, and the selected heater is driven according to the heater driving cycle,
wherein in the control operation, a heater driving cycle of the first heater is calculated by using a phase control method, and a heater driving cycle of the second heater is calculated by using a zero-crossing control method.

8. The method of claim 7, wherein the control operation comprises a first control operation in which the first heater is selected as a heater to be driven when the required quantity of heat is less than the first set capacity, and the heater driving cycle of the first heater is calculated by using the phase control method to thereby drive the first heater.

9. The method of claim 7, wherein the control operation comprises a second control operation in which the second heater is selected as a heater to be driven when the required quantity of heat is equal to or greater than the first set capacity and lower than the second set capacity, and the heater driving cycle of the second heater is calculated by using the zero-crossing control method to thereby drive the second heater.

10. The method of claim 7, wherein the control operation comprises a third control operation in which the first heater and the second heater are selected as heaters to be driven when the required quantity of heat is equal to or greater than the second set capacity, the heater driving cycle of the first heater is calculated by using the phase control method to thereby drive the first heater, and the heater driving cycle of the second heater is calculated by using the zero-crossing control method to thereby drive the second heater.

11. The method of claim 10, wherein, in the third control operation, the heater driving cycle of the second heater is calculated such that the second heater is driven by the second set capacity, and the heater driving cycle of the first heater is calculated such that the first heater is driven by a capacity obtained by subtracting the second set capacity from the required quantity of heat.

12. The method of claim 7, wherein the operation preparation operation comprises:
receiving water in an amount equal to or greater than the set water quantity;
measuring a water temperature of the received water;
calculating the required quantity of heat for heating when the measured water temperature is lower than the set water temperature; and
discharging water when the measured water temperature is equal to or higher than a preset temperature, and going into a standby state,
wherein the preset temperature is equal to or higher than the set water temperature, and
the measuring of the water temperature is performed again when the water temperature is equal to or higher than the set water temperature and lower than the preset temperature.

13. The method of claim 7, wherein the first set capacity is greater than zero and lower than 550 W, and the second set capacity is equal to or greater than 550 W and lower than 1250 W.
